# EUROPÄISCHE PATENTANMELDUNG

(11) **EP 1 270 053 A1**
(43) Veröffentlichungstag der Anmeldung: **02.01.2003**
(21) Anmeldenummer: 02013027.4
(22) Anmeldetag: 13.06.2002
(51) Int. Cl.: A63G 21/20, A63B 69/18, A63C 19/10, B64D 10/00

(54) **Sport- und Freizeiteinrichtung zum Simulieren des Schisprunges**

(30) Priorität: 22.06.2001 AT 9652001
(71) Anmelder: Pondorfer, Walter, 9991 Dölsach (AT)
(72) Erfinder: Pondorfer, Walter, 9991 Dölsach (AT)
(74) Vertreter: Torggler, Paul Norbert, Dr.

(57) **Zusammenfassung**

Eine Sport- und Freizeiteinrichtung zum Simulieren des Schisprunges mit einer oberhalb einer Sprungschanze (2) und dem Vorbau einer Sprungschanze (2) verlaufenden Schiene (1) und mindestens einem entlang der Schiene (1) verfahrbaren Gehänge (8), in dem ein Benützer (9) der Sport- und Freizeiteinrichtung gehalten ist. Die Schiene (1) ist in Seitenansicht als Kurvenbahn mit mindestens zwei gegenläufigen Bögen ausgeführt, wobei ein Bogen im wesentlichen parallel zur Bahn (5) der Sprungschanze (2) verläuft, während der zweite Bogen einer durchschnittlichen Flugbahn einer von der Sprungschanze abspringenden Person angepaßt ist.

## Beschreibung

Die Erfindung bezieht sich auf eine Sport- und Freizeiteinrichtung zum Simulieren des Schisprunges mit einer oberhalb einer Sprungschanze und dem Vorbau einer Sprungschanze verlaufenden Schiene und mindestens einem entlang der Schiene verfahrbaren Gehänge, in dem ein Benützer der Sport- und Freizeiteinrichtung gehalten ist.

Aus der US-PS 5 853 331 ist eine Vorrichtung bekannt, bei der eine Sprungschanze ähnlich der einer Sprungschanze für das Skispringen vorgesehen ist und ein oberhalb dieser Sprungschanze angeordnetes Tragseil, das zwischen einem oberen und einem unteren Punkt, der vor der Sprungschanze liegt, gespannt ist. In das Tragseil sind mittels Gehängen Wägen eingehängt, mit denen die Benützer die Sprungschanze hinunterfahren können, um nach einem kurzen "Sprung" im Tragseil hängend zu Boden zu gleiten.

Aufgabe der Erfindung ist es, eine Vorrichtung der eingangs erwähnten Art dahingehend zu verbessern, daß dem Benutzer der Anlage ein dem Skispringen näher kommendes Sprung- bzw. Fluggefühl vermittelt wird.

Die erfindungsgemäße Aufgabe wird dadurch gelöst, daß die Schiene in Seitenansicht eine Kurvenbahn mit mindestens zwei gegenläufigen Bögen beschreibt, wobei ein Bogen im wesentlichen parallel zur Bahn der Sprungschanze verläuft, während der zweite Bogen einer durchschnittlichen Flugbahn einer von der Sprungschanze abspringenden Person angepaßt ist.

Durch die erfindungsgemäße Aufgabe ergibt sich für den Benützer nach dem Verlassen der Sprungschanze eine längere Sprung- bzw. Flugphase, in der er zwar von dem Gehänge an der Schiene gesichert, aber nicht getragen wird. Er fliegt sozusagen unterhalb der Schiene.

Es ist bekannt, daß Skisprungschanzen meist nur wenige Tage im Jahr genützt werden. Auch die Benützung des umliegenden Areals, wie Tribünen und Aufsprungbereich, werden nur gelegentlich für Großveranstaltungen, wie Popkonzerte od. dgl., genützt. In einem Ausführungsbeispiel der Erfindung ist daher vorgesehen, daß als Sprungschanze eine herkömmliche Schisprungschanze genutzt wird.

Ein Ausführungsbeispiel der Erfindung sieht vor, daß das mindestens eine Gehänge mit Sensoren versehen ist, die die Lastaufnahme und vorzugsweise die bis zur Lastaufnahme zurückgelegte Fahrstrecke des Gehänges ab dem Schanzenende anzeigt. Dadurch kann die Länge des "Fluges" gemessen werden, wodurch sich für den Benützer auch die Möglichkeit ergibt, seinen Sprungstil zu verbessern.

Um die Ausnützung der Sport- und Freizeiteinrichtung zu verbessern, ist in einem Ausführungsbeispiel der Erfindung vorgesehen, daß mehrere Gehänge vorgesehen sind, die beim oberen Ende der Schiene in diese einhängbar und beim unteren Ende der Schiene aus dieser aushängbar sind.

In einem weiteren Ausführungsbeispiel ist beim unteren Ende der Schiene eine Weiche vorgesehen, über die die Gehänge von der Schiene entfernbar sind.

Ein weiteres Ausführungsbeispiel der Erfindung sieht vor, daß auf der Sprungschanze mindestens eine vorzugsweise zwei Fahrschienen für zwei loipenartige Fahrspuren verlegt ist bzw. sind. In diesen Fahrschienen kann der Benützer, der durch das Gehänge gesichert ist, mit Rollschuhen die Sprungschanze hinunterfahren.

Die Fahrschienen werden vorzugsweise von Kastenprofilen gebildet, wobei die Rollschuhe Laufrollen aufweisen, die über einen Großteil der Länge der Schienen bzw. der Fahrschienen an oberen und unteren Laufstegen der Kantenprofile ablaufen. Im letzten Bereich der Fahrschiene im Bereich des Sprungtisches der Sprungschanze sind die Kastenprofile nach oben offen, sodaß der Benützer ohne Behinderung von der Sprungschanze wegspringen kann.

Eine sichere und ökonomische Montage der Schiene wird dadurch erzielt, daß gemäß einem weiteren Ausführungsbeispiel der Erfindung die Schiene auf einem Tragseil aufgehängt ist.

Vorteilhaft ist vorgesehen, daß das Tragseil vom oberen Ende der Sprungschanze bis über den Auslauf verläuft.

Die Schiene ist gemäß einem weiteren Ausführungsbeispiel der Erfindung als Rohr, vorzugsweise als Vierkantrohr ausgeführt.

Erfindungsgemäß ist weiter vorgesehen, daß das mindestens eine Gehänge in einer Laufkatze verankert ist, die mittels Rollen auf der Schiene verfahrbar ist.

Um den Kurvenverlauf der Schiene der Sprungschanze und der Flugbahn besser anpassen zu können, ist in einem weiteren Ausführungsbeispiel der Erfindung vorgesehen, daß die Schiene mittels mehrerer Halteseile am Tragseil hängt und daß die Halteseile in ihrer Länge verstellbar sind.

Um für den Benutzer in bezug auf den Auftrieb einen Ausgleich für die fehlenden Skier zu schaffen, ist ein erfindungsgemäßer Sprunganzug vorgesehen, an dem ein Gleitschirm ausgebildet ist.

Der Gleitschirm wird in einem Ausführungsbeispiel von in der Vorderansicht dreieckigen Tüchern gebildet, die Arme und Beine des Overalls verbinden.

Nachfolgend werden Ausführungsbeispiele der Erfindung anhand der Figuren der beiliegenden Zeichnungen beschrieben. Es zeigen:
- Fig. 1: eine schematisch gehaltene Seitenansicht einer Sprungschanze mit einer erfindungsgemäßen Sport- und Freizeiteinrichtung,
- Fig. 2: ein schematisch gehaltenes Schaubild einer von Stützen getragenen Schiene,
- Fig. 3: eine schematisch gehaltene Seitenansicht einer an einem Tragseil aufgehängten Schiene,
- Fig. 4a: einen Querschnitt durch eine erfindungsgemäße Schiene und eine Stirnansicht einer Laufkatze,
- Fig. 4b: ein schematisch gehaltenes Schaubild einer Laufkatze,
- Fig. 5: einen Querschnitt durch eine Fahrschiene,
- Fig. 6: schematisch eine Ansicht des unteren Bereiches der Schiene mit Weiche,
- Fig. 7: eine schematisch gehaltene Seitenansicht eines weiteren Ausführungsbeispieles einer erfindungsgemäßen Sport- und Freizeiteinrichtung, und

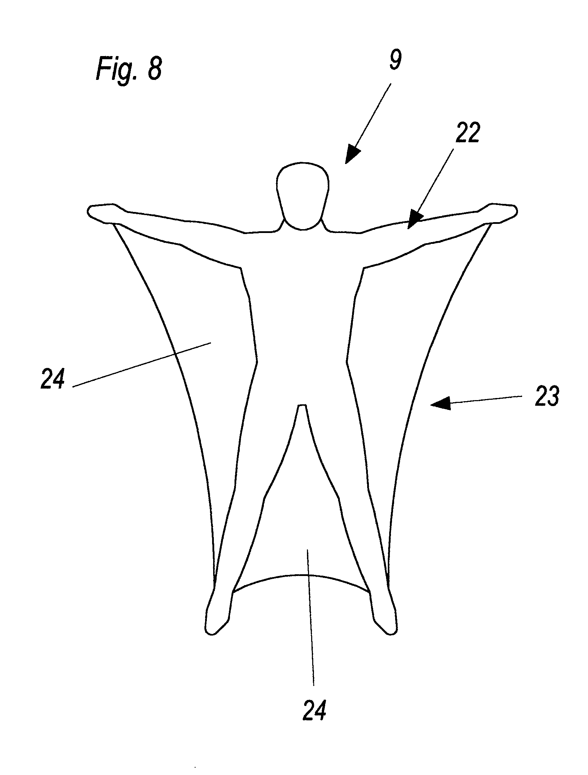

- Fig. 8: einen erfindungsgemäßen Sprunganzug.

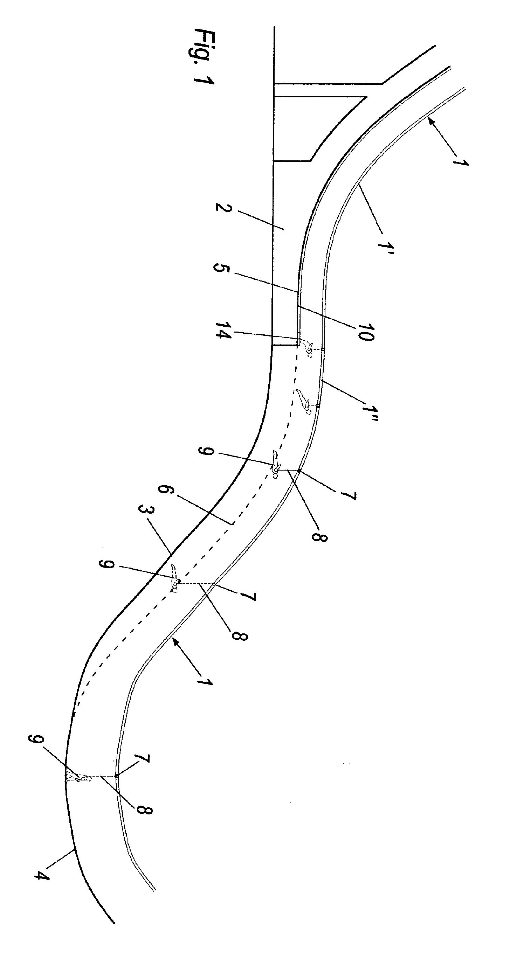

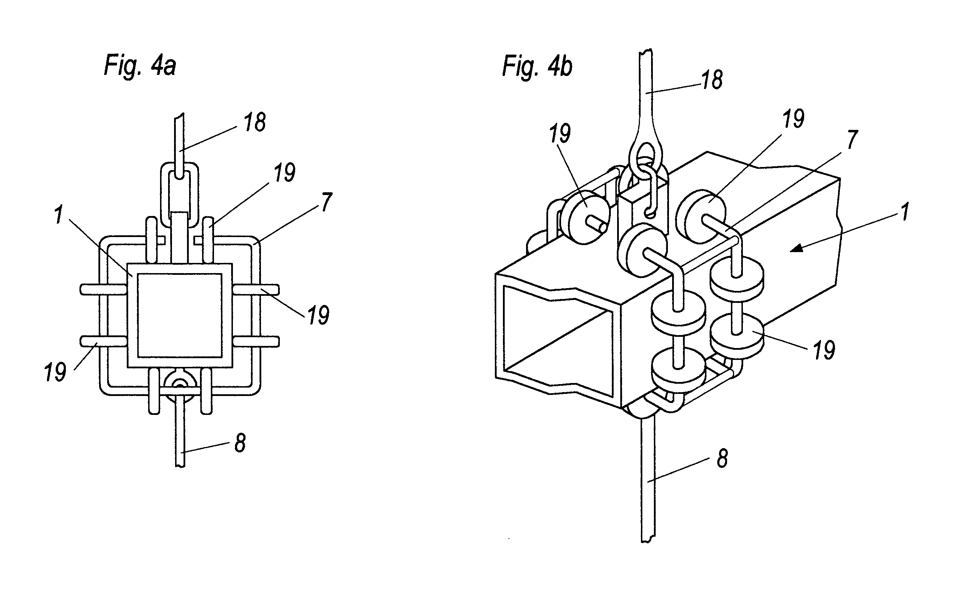

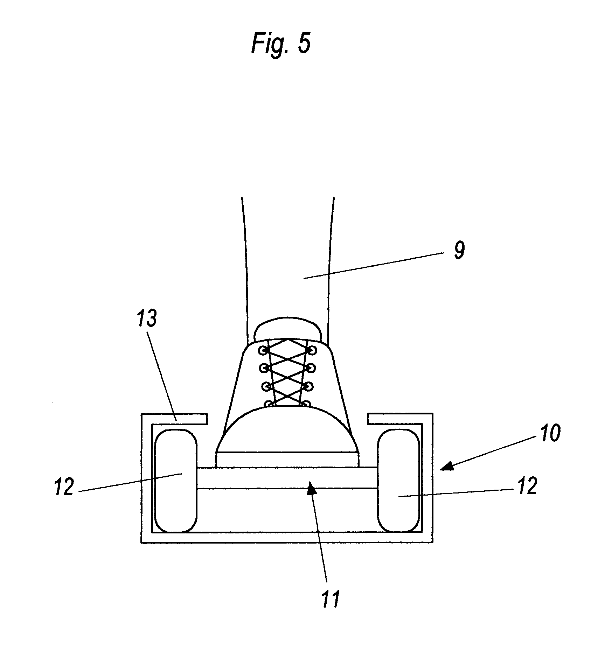

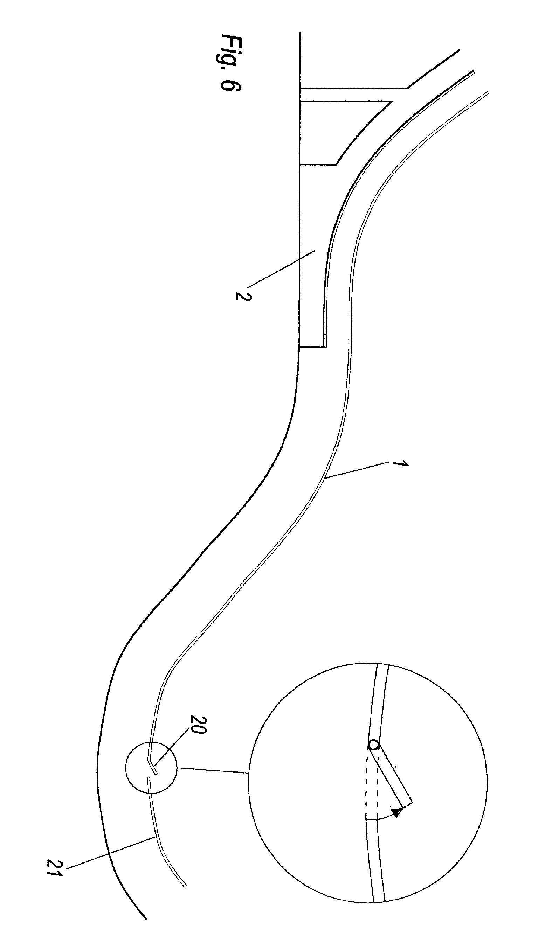

In den Ausführungsbeispielen nach den Fig. 1 bis 6 verläuft eine Schiene 1 entlang und oberhalb einer herkömmlichen stationären Skisprungschanze 2 bis über den Aufsprungbereich 3 und den Auslaufbereich 4 hinaus.

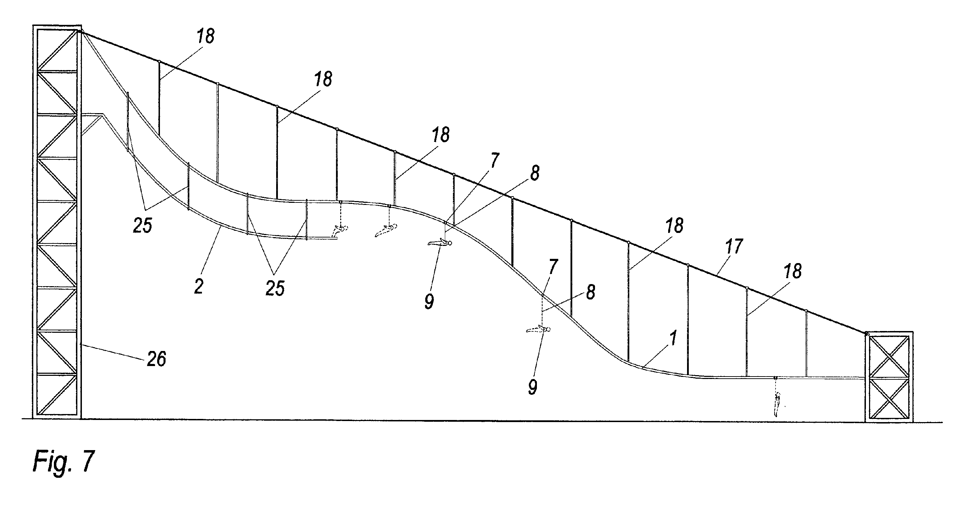

Im Ausführungsbeispiel nach der Fig. 7 ist die Sprungschanze 2 als transportierbare Schwebekonstruktion ausgeführt und hängt mittels Seilen oder Stangen 25 an der Schiene 1. Erreichbar ist die Sprungschanze 2 über ein Gerüst 26, an dem sie mit ihrem oberen Ende abgestützt ist. Mit dem Gerüst 26 ist auch das Tragseil 17 verspannt.

Die Schiene 1 weist in jedem Ausführungsbeispiel eine Krümmung mit zwei Bögen 1', 1" auf, wobei im oberen Bereich der Bogen 1' der Laufbahn 5 der Sprungschanze 2 und im Bereich vor der Sprungschanze 2, der Bogen 1" einer durchschnittlichen Flugbahn 6 eines Springers angepaßt ist.

Die Schiene 1 befindet sich im gezeigten Ausführungsbeispiel ca. im Abstand von 3 m zur Laufbahn 5 der Sprungschanze 2.

Auf der Schiene 1 sind Laufkatzen 7 verfahrbar, in die Gehänge 8 mit einem Gurtwerk ähnlich wie für Fallschirmspringer eingehängt sind, die die Benützer 9 sichern.

Die Benützer 9 können die Sprungschanze 2 auf richtigen Sprungschiern beispielsweise auf einer Mattenbahn hinunterfahren.

Im Ausführungsbeispiel nach den Fig. 1 bis 3 verlaufen entlang der Laufbahn 5 der Sprungschanze 2 Fahrschienen 10, die Kastenprofile bilden. Die Fahrschienen 10 definieren loipenartige Fahrspuren für die Benützer 9. Die Benützer 9 fahren auf Rollschuhen 11 in den Fahrschienen 10 die Sprungschanze 2 hinunter, wobei sie in den Gehängen 8 gesichert sind.

Während der Fahrt entlang der Sprungschanze 2 sind die Benützer 9 mit ihren Rollschuhen 11 in den Schienen 10 dadurch gesichert, daß die Laufrollen 12 der Rollschuhe 10 von oberen Stegen 13 der Schienen 10 abgedeckt werden.

Im unteren Absprungbereich 14 sind die Schienen 10 mit nach oben offenem U-Profil, d.h. ohne den oberen Stegen 13 ausgeführt, sodaß die Benützer 9 die Schienen 10 beim Absprung ohne Probleme verlassen können.

In dem Moment, wo die Benützer 9 die Sprungschanze 2 verlassen, befinden sie sich im freien Flug. Sie werden vom Gehänge 8 nur gesichert, aber nicht getragen.

Sobald die Sprungenergie nachläßt und der eigentliche Sprung beendet ist, sinken die Benützer 9 in das Gehänge 8 und fahren in diesem hängend die Schiene 1 hinunter bis in den Auslaufbereich 4 oder darüber hinaus.

Im unteren Bereich der Schiene ist eine Weiche 20 vorgesehen, die es ermöglicht, die Laufkatzen 7 mit den Hängegeschirren 8 von der Schiene 1 zu entfernen. Beim Herunterfahren überfahren die Laufkatzen 7 vorerst die Weiche 20 und rollen dann den Streckenabschnitt 21 zurück. In den Hängeschirren 8 sind vorzugsweise Sensoren eingebaut, die festhalten, wann der Benützer nach der Sprungphase in das Hängegeschirr 8 fällt, sodaß die Länge des Sprunges festgehalten werden kann.

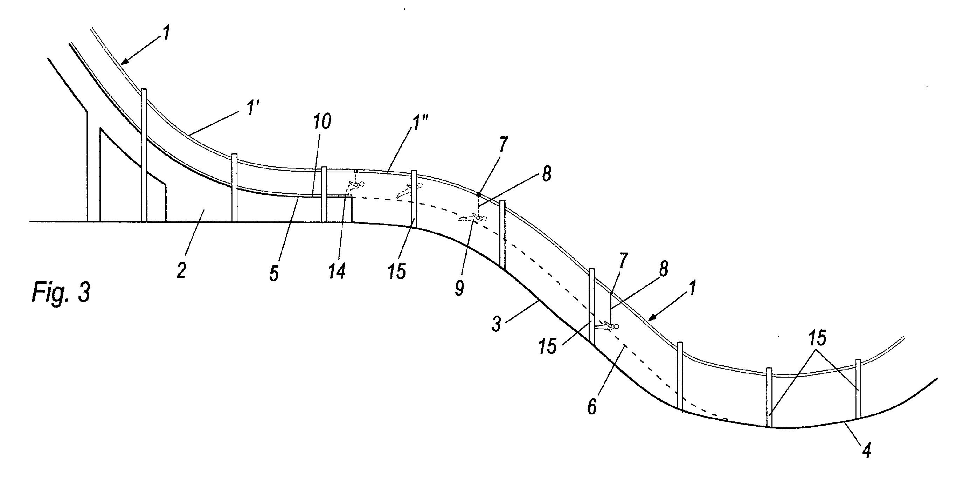

Die Schiene 1 kann beispielsweise wie in der Fig. 3 gezeigt von Stützen 15 getragen werden.

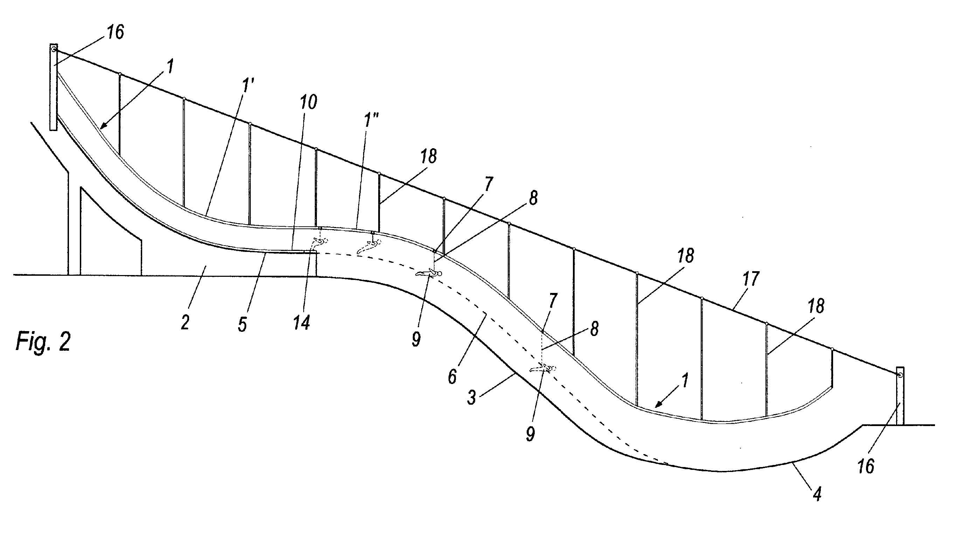

Ein bevorzugtes Ausführungsbeispiel der erfindungsgemäßen Sport- und Freizeiteinrichtung ist in der Fig. 2 gezeigt. Dabei ist am oberen Ende der Sprungschanze 2 und am Ende des Auslaufbereiches 4 jeweils eine Stütze 16 vorgesehen. Zwischen den Stützen 16 ist ein Tragseil 17 verspannt. An dem Tragseil 17 hängen mehrere Halteseile 18, die ihrerseits die Schiene 20 tragen. Dadurch, daß die Länge der Halteseile 18 veränderbar ist, kann die Schiene 1 problemlos dem gewünschten Kurvenverlauf angepaßt werden. Im Ausführungsbeispiel ist die Schiene 1 als Vierkantrohr ausgebildet und besteht aus mehreren zusammengesteckten Schienenteilen. Die entlang der Schiene 1 verfahrbaren Laufkatzen 7 sind mit Laufrollen 19 versehen, die an allen vier Flächen der Schiene 1 ablaufen, sodaß eine optimale Führung für die Laufkatzen 7 gewährleistet ist.

Um die Sprung- bzw. Flugphase zu verlängern, kann der Benützer 9 einen erfindungsgemäßen Sprunganzug 22 tragen, der mit einem Gleitschirm 23 versehen ist.

Im gezeigten Ausführungsbeispiel wird der Gleitschirm von dreieckigen Tüchern 24 gebildet, die Arme und Beine des Sprunganzuges 22 verbinden.

## Patentansprüche

1. Sport- und Freizeiteinrichtung zum Simulieren des Schisprunges mit einer oberhalb einer Sprungschanze und dem Vorbau einer Sprungschanze verlaufenden Schiene und mindestens einem entlang der Schiene verfahrbaren Gehänge, in dem ein Benützer der Sport- und Freizeiteinrichtung gehalten ist, **dadurch gekennzeichnet, daß** die Schiene (1) in Seitenansicht eine Kurvenbahn mit mindestens zwei gegenläufigen Bögen beschreibt, wobei ein Bogen im wesentlichen parallel zur Bahn (5) der Sprungschanze (2) verläuft, während der zweite Bogen einer durchschnittlichen Flugbahn einer von der Sprungschanze abspringenden Person angepaßt ist.

2. Sport- und Freizeiteinrichtung nach Anspruch 1, **dadurch gekennzeichnet, daß** das mindestens eine Gehänge (8) dehnbar ist.

3. Sport- und Freizeiteinrichtung nach Anspruch 1, **dadurch gekennzeichnet, daß** die Länge des mindestens einen Gehänges (8) derart bemessen ist, daß die im Gehänge (8) verankerte Person (9) zumindest im ersten Bereich der Flugbahn vom Gehänge (8) gesichert, aber nicht getragen wird.

4. Sport- und Freizeiteinrichtung nach einem der Ansprüche 1 bis 3, **dadurch gekennzeichnet, daß** das mindestens eine Gehänge (8) mit Sensoren versehen ist, die die Lastaufnahme und vorzugsweise die bis zur Lastaufnahme zurückgelegte Fahrstrecke des Gehänges (8) entlang der Schiene (1) ab dem Schanzenende anzeigen.

5. Sport- und Freizeiteinrichtung nach einem der Ansprüche 1 bis 4, **dadurch gekennzeichnet, daß** mehrere Gehänge (8) vorgesehen sind, die beim oberen Ende der Schiene (1) in diese einhängbar und am unteren Ende der Schiene (1) aus dieser aushängbar sind.

6. Sport- und Freizeiteinrichtung nach Anspruch 5, **gekennzeichnet durch** eine Weiche (20) beim unteren Ende der Schiene (1) über die die Gehänge (8) von der Schiene (1) entfernbar sind.

7. Sport- und Freizeiteinrichtung nach einem der Ansprüche 1 bis 6, **dadurch gekennzeichnet, daß** der Abstand von der Schiene (1) zur Bahn (5) der Sprungschanze (2) zwischen 2,5 m und 3,5 m, vorzugsweise 3 m beträgt.

8. Sport- und Freizeiteinrichtung nach einem der Ansprüche 1 bis 7, **dadurch gekennzeichnet, daß** die Gehänge (8) mit einer Dämpfeinrichtung versehen sind.

9. Sport- und Freizeiteinrichtung nach einem der Ansprüche 1 bis 8, **dadurch gekennzeichnet, daß** auf der Sprungschanze (2) mindestens eine vorzugsweise zwei Fahrschienen (10) für zwei loipenartige Fahrspuren verlegt ist bzw. sind.

10. Sport- und Freizeiteinrichtung nach Anspruch 9, **dadurch gekennzeichnet, daß** die Fahrspuren von Fahrschienen (10) mit Kastenprofilen mit einem oberen Durchlaß gebildet werden und daß die Fahrschienen (10) mit Rollschuhen (11) befahrbar sind.

11. Sport- und Freizeiteinrichtung nach Anspruch 10, **dadurch gekennzeichnet, daß** Laufrollen (12) der Rollschule (11) an oberen und unteren Laufstegen der Fahrschienen (10) ablaufen.

12. Sport- und Freizeiteinrichtung nach den Ansprüchen 10 und 11, **dadurch gekennzeichnet, daß** die Kastenprofile der Fahrschienen (10) im Bereich des Sprungtisches der Sprungschanze (2) nach oben zur Gänze offen sind.

13. Sport- und Freizeiteinrichtung nach einem der Ansprüche 1 bis 12, **dadurch gekennzeichnet, daß** die Schiene (1) auf einem Tragseil (17) aufgehängt ist.

14. Sport- und Freizeiteinrichtung nach Anspruch 13, **dadurch gekennzeichnet, daß** das Tragseil (17) vom oberen Ende der Sprungschanze (2) bis über den Auslauf verläuft.

15. Sport- und Freizeiteinrichtung nach einem der Ansprüche 1 bis 14, **dadurch gekennzeichnet, daß** das mindestens eine Gehänge (8) in einer Laufkatze (7) verankert ist, die mittels Rollen (19) auf der Schiene (1) verfahrbar ist.

16. Sport- und Freizeiteinrichtung nach einem der Ansprüche 1 bis 15, **dadurch gekennzeichnet, daß** die Schiene (1) als Rohr, vorzugsweise als Vierkantrohr ausgeführt ist.

17. Sport- und Freizeiteinrichtung nach den Ansprüchen 15 und 16, **dadurch gekennzeichnet, daß** Laufrollen (19) der Laufkatze (7) an allen vier Seiten der Schiene (1) verlaufen.

18. Sport- und Freizeiteinrichtung nach Anspruch 13 oder 14, **dadurch gekennzeichnet, daß** die Schiene (1) mittels mehrerer Halteseile (18) am Tragseil (17) hängt.

19. Sport- und Freizeiteinrichtung nach Anspruch 18, **dadurch gekennzeichnet, daß** die Halteseile (18) in ihrer Länge verstellbar sind.

20. Sport- und Freizeiteinrichtung nach einem der Ansprüche 1 bis 19, **dadurch gekennzeichnet, daß** als Sprungschanze eine herkömmliche Sprungschanze für Schispringer eingesetzt wird.

21. Sport- und Freizeiteinrichtung nach einem der Ansprüche 1 bis 19, **dadurch gekennzeichnet, daß** die Sprungschanze (2) ,die als Schwebekonstruktion ausgebildet ist, in die Schiene (1) eingehängt ist.

22. Sport- und Freizeiteinrichtung nach einem der Ansprüche 1 bis 19, **dadurch gekennzeichnet, daß** die Sprungschanze (2) die als Schwebekonstruktion ausgeführt ist, auf dem Tragseil (17) für die Schiene (1) oder einem separaten Tragseil aufgehängt ist.

23. Als Overall ausgebildeter Sprunganzug zur Benutzung einer Sport- und Freizeiteinrichtung nach einem der Ansprüche 1 bis 22, **dadurch gekennzeichnet, daß** am Overall ein Gleitschirm (23) ausgebildet ist.

24. Sprunganzug nach Anspruch 23, **dadurch gekennzeichnet, daß** der Gleitschirm (23) von in der Vorderansicht dreieckigen Tüchern (24) gebildet wird, die Arme und Beine des Overalls verbinden.
